Europäisches Patentamt

European Patent Office

Office européen des brevets

(11) Publication number: **0 087 279**
**B1**

# EUROPEAN PATENT SPECIFICATION

(45) Date of publication of patent specification: **11.11.87**

(51) Int. Cl.⁴: **B 23 P 6/04**

(21) Application number: **83300828.7**

(22) Date of filing: **18.02.83**

(54) Method of repairing turbine blade.

(30) Priority: **20.02.82 GB 8205078**

(43) Date of publication of application:
**31.08.83 Bulletin 83/35**

(45) Publication of the grant of the patent:
**11.11.87 Bulletin 87/46**

(84) Designated Contracting States:
**AT BE CH DE FR IT LI LU NL SE**

(56) References cited:
**EP-A-0 056 328**
**DE-A-2 054 549**
**US-A-3 449 816**
**US-A-3 576 065**

(73) Proprietor: **REFURBISHED TURBINE COMPONENTS LIMITED**
**George Baylis Road**
**Droitwich Hereford and Worcester (GB)**

(72) Inventor: **Fraser, Michael James**
**Dale Cross Grange Mearse Lane**
**Barnt Green Birmingham (GB)**

(74) Representative: **Symes, Robert George et al**
**FORRESTER & BOEHMERT Widenmayerstrasse 4/I**
**D-8000 München 22 (DE)**

## Description

The present invention relates to a method of repairing turbine blades and in particular relates to the repair of the type of turbine blade found in a turbine blade assembly, for example a rotor, in which adjacent blades are interconnected by lacing wires the securing of which to individual turbine blades requires a hole formed in the turbine blade.

The lacing wires are used to prevent excessive relative movement between the blades and to generally dampen any vibration during operation of the turbine. The lacing wires therefore render the turbine structure more rigid but do not prevent all relative movement between the blades.

Turbine blades are, in use, subjected to damage and erosion primarily in:

(a) the leading edge of the outer end of each blade the damage being primarily due to erosion by particles carried by the steam and also because of impact between the blade and the steam itself. The leading edge of the outer edge of the blade being that part which has the greatest linear speed in use and therefore has a higher impact speed with the steam and particles carried thereby;

(b) areas of discontinuity or non-uniformity in the blade. Damage in these areas usually taking the form of cracks in the blade, due to fatigue failure and/or stress, damage due to stress being known as "stress corrosion cracking".

"Stress corrosion cracking" is the formation of cracks in the material of the blade and it occurs primarily around places of discontinuity or non-uniformity in the turbine blade.

It is desirable that such cracks may be repaired rather than replacing the blades in view of the high expense involved in total blade replacement and furthermore it is preferable that such a repair may be carried out whilst the blade is still in situ on the rotor since the step of removing the blade from the rotor necessarily takes a very much longer time to effect the repair leading to greater expense and a longer out of commission time of the turbine from which the rotor has been removed.

In the past repairs have been made to turbine blades in which cracking has taken place around discontinuities such as lacing wire holes by removing material by grinding in the region where cracks have occurred replacing the material removed by grinding by welding and then subsequently machining the blade to return it to its original shape.

Such repairs have not been found to be entirely satisfactory and the lifespan of such a repair is rather indeterminate since the reformation of cracks in the repaired material is a common occurrence.

European patent application EP—A2—0,056,328 discloses a method of repairing a turbine blade, the turbine blade being of the type having lacing wire holes which, prior to any repair step involving the application of considerable heat, i.e. a welding or brazing operation, has the lacing wire holes filled with material so as to remove the discontinuities in the material afforded by the lacing wire holes. A problem may occur however in the accurate location of the positions where new lacing wire holes are to be formed subsequent to the repair step.

It is an object of the present invention to provide an improved method of repairing turbine blades having lacing wire holes.

According to the present invention, we provide a method of repairing turbine blades in which damage has occurred around a lacing wire hole characterised in that the method comprises the following steps:—

(a) removing the lacing wire and any damaged material from the blade around the lacing wire hole;

(b) inserting a piece of new material in said lacing wire hole;

(c) securing said piece of material in place by fused metal;

(d) subjecting at least that part of the blade to which repair has been effected to a heat treatment process to relieve residual stress;

(e) machining the repaired part of the blade to return the blade to its original form;

(f) reforming the lacing wire hole;

and in that said piece of new material provides locating means to guide a lacing wire hole forming implement.

The securing of said piece of metal in place by fused metal may comprise a welding or a brazing process.

It is envisaged that the piece of material inserted into the lacing wire hole may not necessarily be the same size as the original lacing wire hole nor may it necessarily be of identical material from that which the remainder of the turbine blade is made, which material may typically comprise a 12% chrome steel.

If the insert is of a size such that on reforming the lacing wire hole the insert will be virtually totally removed then it is only necessary that the insert imparts to the blade, during the heat treatment process to relieve residual stress, an infill for the discontinuity provided by the lacing wire hole, so as to ensure satisfactory residual stress relief.

If the inserted piece of material is intended to at least in part form part of the turbine blade even after reforming of the lacing wire hole then it must be of a material suitable for such a purpose and may for example comprise a piece of material identical to that from which the turbine blade is made or, may alternatively comprise a piece of material different from that of turbine blade having beneficial properties such as durability, ductility, or other like fluid in order to prevent or at least minimise the re-occurrence of cracks forming around the reformed lacing wire hole.

It is important that the inserted piece of material is secured to the blade completely around its perimeter in order to ensure complete continuity of material. Provided the above requirement is complied with, the minimum amount of welding that has to take place the better, since any welding necessarily produces large increase in temperature in a locality immediate to the welding area and gives rise to stress and distortion in the blade. If therefore the welding is kept to a minimum, the stress and distortion is also kept to a minimum.

The guiding means provided for the lacing wire hole forming implement ensures that the lacing wire hole is reformed in the correct place.

Said insert may be provided with location means in the form of an indentation on each or either end thereof, said ends being that surface of the insert which after securing to the turbine blade are exposed. Alternatively, the insert may have a length in a direction between its ends greater than the thickness of the turbine blade so that when secured to the turbine blade at least one end stands proud of a surface of the turbine blade and indexing means associated with a lacing wire hole forming implement may locate with the outstanding part of said insert in such a case the reforming of the lacing wire holes may take place before subsequent machining of the insert necessary to return the turbine blade to its original form.

It is further envisaged that the locating means may comprise a throughbore extending through the insert in a direction substantially the same as the longitudinal axis of the new lacing wire hole. The through bore is preferably of a size such that it has a negligible detrimental effect during the stress relieving heat treatment process.

The method of the present invention reduces the occurrence of residual stress in the repaired area of the turbine blade due to repair and further enhances the reuseable life of the repaired blade.

The filling of the lacing wire hole removes an area of discontinuity thus eliminating an area of high residual stress less likely to occur after the application of any repair process involving considerable heat.

By filling the lacing wire hole with a piece of solid material the likelihood of discontinuities in the material and/or other unwanted constituents that may be present in fused metal in the metal forming the surface of the new lacing wire hole when reformed is reduced.

The double taper that may be provided by removing material around a damaged lacing wire hole ensures that the new piece of solid material can be secured to the blade completely around its circumference and a very satisfactory join can be made between the blade and the piece of material without excessive generation of heat.

By providing location means for a boring or a drilling machine to reform the lacing wire hole the machine may easily be positioned to reform the lacing wire hole in the correct position.

The invention will now be described in more detail by way of example only with reference to the accompanying drawings wherein:

FIGURE 1 is a perspective view of a turbine blade having lacing wire holes;

FIGURE 2 is a view of a turbine rotor comprising a plurality of blades as shown in Figure 1 interconnected by lacing wires;

FIGURE 3 is a plan view of part of a turbine blade showing cracks around the lacing wire hole;

FIGURE 4 is a sectional view of the turbine blade the damaged material having been removed from around the lacing wire hole;

FIGURE 5 is a sectional view corresponding to the section shown in Figure 4 of a piece of material having been inserted;

FIGURE 6 illustrates the inserted material shown in Figure 5 welded into position;

FIGURE 7 is a sectional view of the repaired turbine blade the facing wire hole having been reformed and the blade machined to its original form;

FIGURE 8 is a sectional view of turbine blade and the repair around the lacing wire hole in which an insert has been secured to the blade.

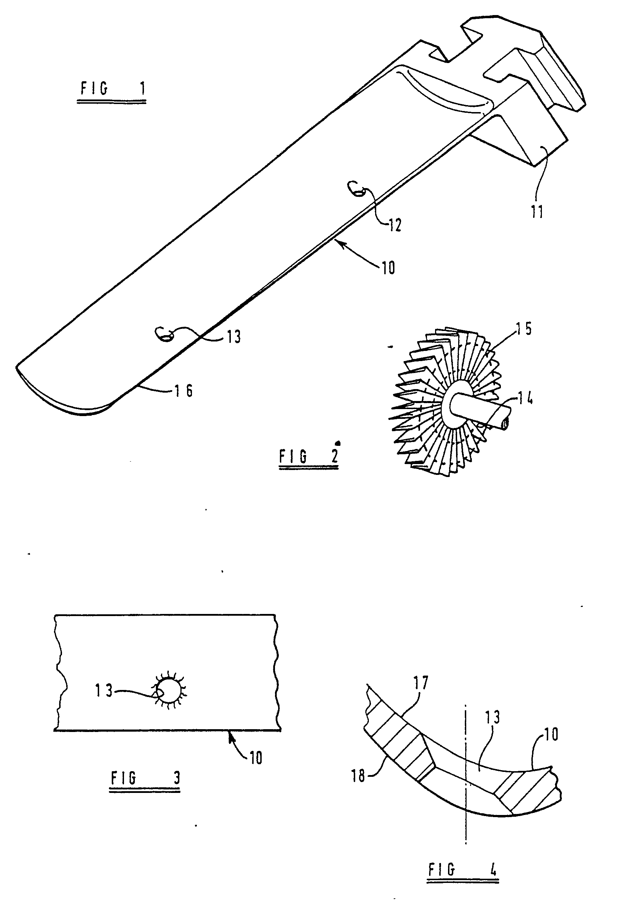

Referring first to Figures 1 and 2 a turbine blade 10 has a root part 11 by means of which it is secured to a rotor shaft a plurality of blades 10 forming a rotor as shown in Figure 2.

Each blade 10 has a pair of lacing wire holes 12 and 13 through which lacing wires 14 and 15 respectively extend. The lacing wires 14 and 15 may be secured to each blade 10 by welding the lacing wires 14 and 15 to each blade in the vicinity of the holes 12 and 13.

After a period of use the turbine blades 10 of a rotor usually as shown in Figure 2, have to be inspected to see if any repair is necessary the most common areas requiring repair being the leading edge of the part 16 adjacent the outer end of the blade 10 for reasons which have already been described. Another area which is frequently requiring repair is the region of the lacing wire holes 12 and 13.

The damage around the lacing wire holes 12 and 13 frequently manifests itself in the form of cracks appearing in the material of the turbine blade 10. Such a phenomenon is known as "stress corrosion cracking" and in some cases may take the form of short hair-line cracks and in more severe cases the cracks can be several millimeters long extending from the circumference of the lacing wire hole.

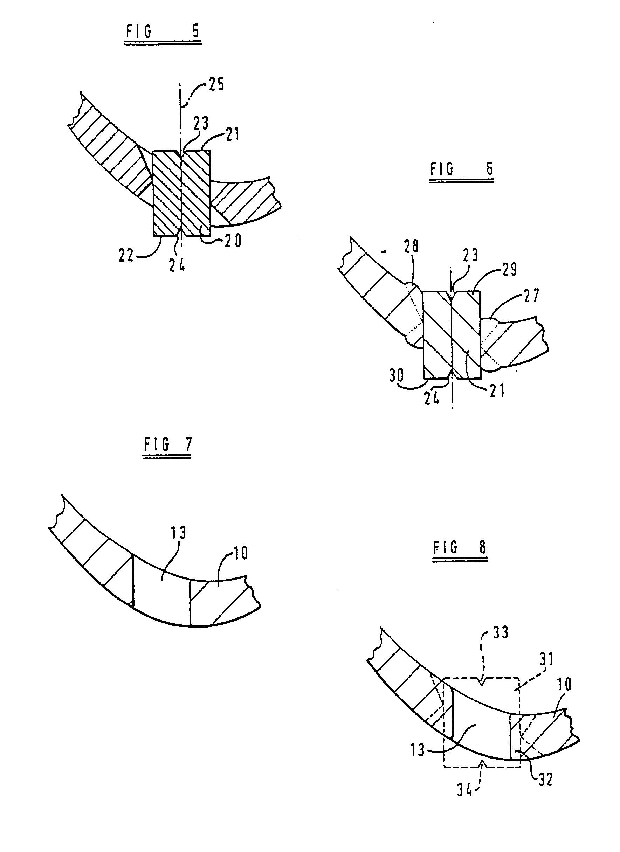

To effect a repair in accordance with the present invention the damaged material around the lacing wire hole 13 is removed by grinding for example, to provide a hole of diabolo like shape substantially as shown in Figure 4.

The material of the turbine blade 10 around the lacing wire hole 13 is preferably removed by grinding and the configuration of the enlarged diabolo like hole formed preferably has a throat approximately mid-way between the surfaces 17 and 18 of the blade progressively more material being removed in a direction away from the throat towards each of the surfaces 17 and 18.

The reason for such a shape is so that when a piece of material 20 as shown in Figure 5 is inserted in the enlarged hole a V-shaped trough is defined around the insert on each side of the turbine blade 10 which trough facilitates a satisfactory weld to be made between the turbine blade 10 and the insert 20.

The insert 20 is conveniently provided, in its end surfaces 21, 22, with respective indentations 23 and 24 located on the central axis 25 of the insert 21.

The indentations 23 and 24 permit of simple location of an implement, for example a drill bit, for reforming the lacing wire holes and the correct location of the lacing wire holes is ensured.

Figure 6 illustrates a turbine blade 10 in which the insert 21 has been positioned and welded into place. The V-shaped troughs having been filled with fused metal during the welding process.

The turbine blade 10 is then subjected to a heat treatment process which heat treatment process may be carried out to the whole blade, particularly if repairs have been carried out in other places on the blade. The temperature and length of time to which the blade or part of the blade 10 is subjected to heat depends on the size of the blade and the material from which it is made.

Typically a blade made from a 12% chrome steel may be subjected to temperature of about 650°C for a period of about 1 hour.

It is important that the heat treatment process is carried out when the blade 10 is in the state as shown in Figure 6 i.e. after all the welding operations have been carried out and whilst the lacing wire hole 13 is filled by the insert 21.

It has been found that the repair in which heat treatment process is carried out when the lacing wire hole 13 is not filled by an insert 21 may well lead to the premature reoccurrence of "stress corrosion cracking" it is believed that satisfactory residual stress relief cannot be carried out at least by the heat treatment process mentioned above when irregularities such as lacing wire holes are present in the blade.

The heat treatment process may be preceded by gauging of the blade to ensure its correct form, with the exception of areas where there is obviously an excess of weld material such as that surrounding the lacing wire hole, and a further step of subjecting of the blade 10 to mechanical forces to return the blade to its correct shape and form if necessary.

After heat treatment, a small amount of machining may be carried out provided such machining does not give rise to excessive heat generation to remove excess weld material such as that shown at 27 and 28.

The new lacing wire hole may then be drilled by locating the drill piece on either the indentation 23 or 24 whichever is most convenient and following the formation of the lacing wire hole 14 any excess material of the insert 21 for example some material may exist at the ends 29 and 30 may be removed by machining.

The repaired blade 10 has a cross section conforming to the original form of the blade as shown in Figure 7.

It is envisaged that in some cases an insert 31 may be provided in which the diameter of the insert 31 is considerably larger than the original lacing wire hole 13.

Such an insert 31 may be provided if for example the cracks extending from the lacing wire hole 13 are of excessive length or alternatively if it is desired to provide an annular surround to the lacing wire hole 13 of a material having properties which are likely to reinforce the lacing wire hole 13 and eliminate or minimise the reoccurrence of stress corrosion cracking.

In each case material is removed from the turbine blade 10 to give a cross sectional formation similar to that shown in Figure 4 however a greater amount of material will be removed and the diameter of the central throat will be considerably larger to accommodate the insert 31.

The remainder of the process is the same as afore described the only difference being that after the repair the turbine blade 10 will be left with an annular piece of material 32 remaining from the insert 31.

The insert 31 will be provided with similar indentations 33 and 34 for location of a drill to reform the lacing wire hole 13.

Whereas each of the inserts 21 and 31 have been described having indentations 23, 24 and 33, 34 respectively for location of the drill to reform the lacing wire holes 13 it is envisaged that a drilling machine may have a part adapted to engage a part of the insert 21 or 31 which stands proud of the upper or lower surface of the turbine blade in order to locate the drilling machine correctly to reform the lacing wire hole 13 in its proper place.

Furthermore an alternative method of location for a drill or drilling machine may comprise a central through bore which is preferably of very small diameter to ensure that no problems are incurred during residual stress relief by heat treatment.

**Claims**

1. A method of repairing turbine blades (10) in which damage has occurred around a lacing wire hole (13) characterised in that the method comprises the following steps:—

(a) removing the lacing wire (15) and any damaged material from the blade around the lacing wire hole (13);

(b) inserting a piece of new material (21) in said lacing wire hole (13);

(c) securing said piece of material (21) in place by fused metal (27, 28);

(d) subjecting at least that part of the blade to which repair has been effected to a heat treatment process to relieve residual stress;

(e) machining the repaired part of the blade to return the blade to its original form;

(f) reforming the lacing wire hole (13);
and in that said piece of new material (21) provides locating means (23, 24) to guide a lacing wire hole forming implement.

2. A method of repairing a turbine blade as claimed in Claim 1 characterised in that said lacing wire hole (13) is enlarged to a predetermined shape and diameter and wherein said piece of inserted material (21) is of a diameter larger than the diameter of said original lacing wire hole (13).

3. A method as claimed in Claim 1 or Claim 2 characterised in that said piece of inserted material (21) is identical to or compatible with the material from which the turbine blade (10) is made.

4. A method as claimed in Claim 1 or Claim 2 characterised in that the piece of inserted material (21) is different from the material of the turbine blade (10) and is selected as having beneficial properties, such as durability and/or ductility to minimise the re-occurrence of cracks forming around the reformed lacing wire hole (13).

5. A method as claimed in any one of the preceding claims characterised in that the inserted piece of material (21) is secured to the turbine blade completely around its perimeter.

6. A method as claimed in any one of the preceding claims characterised in that material is removed from the turbine blade (10) around said lacing wire hole (13) to form a hole having a minimum diameter intermediate its ends and greater diameters at each end, and in that said piece of inserted material (21) has an outer shape of cylindrical form and wherein its diameter is substantially the same as the minimum diameter of the hole formed in the turbine blade (10).

7. A method as claimed in any one of the preceding claims characterised in that said locating means comprises an indentation (23, 24) on at least one end of said piece of material (21).

8. A method as claimed in any one of Claims 1 to 6 characterised in that said location means comprises a through bore of a diameter small compared with the diameter of said original lacing wire hole (13).

9. A method as claimed in any one of Claims 1 to 6 characterised in that said location means comprises said piece of material (21), the piece of material (21) being formed of a length such that when secured in position in the turbine blade (10), at least one end stands proud of the surface of the turbine blade (10).

**Patentansprüche**

1. Verfahren zum Reparieren von Turbinenblättern (10), bei denen Beschädigungen um ein Versteifungsdrahtloch (13) herum aufgetreten sind, dadurch gekennzeichnet, daß das Verfahren die folgenden Schritte umfaßt:

a) Entfernung des Versteifungsdrahtes (15) und jeden beschädigten Materials von dem Blatt um das Versteifungsdrahtloch (13) herum;

b) Einsetzen eines Stücks neuen Materials (21) in besagtes Versteifungsloch (13);

c) Befestigen besagten Stücks vom Material (21) an seinem Platz mit Hilfe von geschmolzenem Metall (27, 28);

d) Aussetzen wenigstens des Abschnitts des Blattes, in dem die Reparatur vorgenommen worden ist, einem Hitzebehandlungsprozeß, um Restspannungen abzubauen;

e) Maschinelles Behandeln des reparierten Teils des Blattes, um die Originalform des Blattes wieder herzustellen, und

f) Wiederausbilden des Versteifungsdrahtlochs (13);

und weiter dadurch, daß besagtes Stück neuen Materials (21) Lokalisierungsmittel (23, 24), umfaßt um das Instrument, das das Versteifungsdrahtloch ausformt, zu führen.

2. Verfahren zum Reparieren eines Turbinenblattes wie in Anspruch 1 beansprucht, dadurch gekennzeichnet, daß besagtes Versteifungsdrahtloch (13) auf vorbestimmte Form und Durchmesser vergrößert ist, und wobei besagtes Stück eingesetzten Materials (21) einen Durchmesser hat, der größer ist als der Durchmesser besagten ursprünglichen Versteifungsdrahtlochs (13).

3. Verfahren wie in Anspruch 1 oder 2 beansprucht, dadurch gekennzeichnet, daß besagtes Stück eingesetzten Materials (21) mit dem Material, aus dem das Turbinenblatt (10) gemacht ist, identisch oder verträglich ist.

4. Verfahren wie in Anspruch 1 oder 2 beansprucht, dadurch gekennzeichnet, daß das Stück von eingesetztem Material (21) sich von dem Material des Turbinenblattes (10) unterscheidet und so ausgewählt ist, daß es vorteilhafte Eigenschaften wie Beständigkeit und/oder Plastizität aufweist, um das Wiederauftreten von Brüchen zu minimieren, die um die wiederausgebildeten Versteifungsdrahtlöcher (13) herum auftreten.

5. Verfahren wie in irgendeinem der vorangehenden Ansprüche beansprucht, dadurch gekennzeichnet, daß das eingesetzte Stück Materials (21) um seinen gesamten Umfang herum an dem Turbinenblatt befestigt ist.

6. Verfahren wie in irgendeinem der vorangehenden Ansprüche beansprucht, dadurch gekennzeichnet, daß Material von dem Turbinenblatt (10) um besagtes Versteifungsdrahtloch (13) herum entfernt wird, um ein Loch auszubilden, das einen minimierten Durchmesser zwischen seinen Enden und größere Durchmesser an den Enden aufweist, und dadurch, daß besagtes Stück von eingesetztem Material (21) eine äußere Ausgestaltung von zylindrischer Form hat, und wobei dessen Durchmesser im wesentlichen der gleiche ist wie der minimale Durchmesser des Loches, das in dem Turbinenblatt (10) ausgebildet worden ist.

7. Verfahren wie in irgendeinem der vorangehenden Ansprüche beansprucht, dadurch gekennzeichnet, daß besagte Lokalisierungsmittel wenigstens auf einem Ende besagten Stücks von Material (21) eine Einkerbung (23, 24) aufweisen.

8. Verfahren wie in irgendeinem der Ansprüche 1 bis 6 beansprucht, dadurch gekennzeichnet, daß besagte Lokalisierungsmittel eine Durchbohrung umfassen, deren Durchmesser klein ist im Vergleich mit dem Durchmesser besagten ursprünglichen Versteifungsdrahtlochs (13).

9. Verfahren wie in irgendeinem der Ansprüche 1 bis 6 beansprucht, dadurch gekennzeichnet, daß besagte Lokalisierungsmittel besagtes Stück von Material (21) umfassen, wobei das Stück von Material (21) mit solch einer Länge ausgebildet ist, daß, wenn es in dem Turbinenblatt (10) in Position befestigt wird, wenigstens ein Ende erhaben über der Oberfläche des Turbinenblattes (10) steht.

**Revendications**

1. Méthode pour réparer des pales (10) de turbines dans lesquelles une détérioration s'est produite autour d'un trou (13) de passage d'un câble d'attache, caractérisée en ce qu'elle englobe les étapes suivantes:

(a) enlèvement du câble d'attache (15) et de toute matière détériorée de la pale, autour du trou (13) de passage du câble d'attache;

(b) insertion d'une nouvelle pièce de matériau (21) dans ledit trou (13) de passage du câble d'attache;

(c) blocage en place de ladite pièce de matériau (21), par un métal en fusion (27, 28);

(d) soumission d'au moins la région de la pale, sur laquelle une réparation a été effectuée, à un traitement thermique pour supprimer la contrainte résiduelle;

(e) usinage de la partie réparée de la pale pour ramener cette pale à sa forme originelle;

(f) nouveau forage du trou (13) de passage du câble d'attache;

et par le fait que ladite nouvelle pièce de matériau (21) fournit des moyens de positionnement (23, 24) assurant le guidage d'un outillage d'élaboration du trou de passage du câble d'attache.

2. Méthode pour réparer une pale de turbine selon la revendication 1, caractérisée par le fait que ledit trou (13) de passage du câble d'attache est élargi jusqu'à une forme et un diamètre prédéterminés; et en ce que ladite pièce de matériau insérée (21) est d'un diamètre plus grand que le diamètre dudit trou initial (13) de passage du câble d'attache.

3. Méthode selon la revendication 1 ou la revendication 2, caractérisée par le fait que ladite pièce de matériau insérée (21) est identique au matériau dont la pale (10) de turbine est constituée, ou compatible avec ce matériau.

4. Méthode selon la revendication 1 ou la revendication 2, caractérisée par le fait que la pièce de matériau insérée (21) diffère du matériau de la pale (10) de turbine et est choisie pour ses propriétés avantageuses, telles que la durabilité et/ou la ductilité, afin de minimiser la réapparition de fissures apparaissant autour du trou (13) nouvellement foré de passage du câble d'attache.

5. Méthode selon l'une quelconque des revendications précédentes, caractériséepar le fait que la pièce de matériau insérée (21) est assujettie à la pale de turbine sur la totalité de son périmètre.

6. Méthode selon l'une quelconque des revendications précédentes, caractérisée par le fait que de la matière est enlevée de la pale (10) de turbine, autour dudit trou (13) de passage du câble d'attache, pour former un trou présentant un diamètre minimal à mi-distance de ses extrémités, et des diamètres plus forts à chaque extrémité; et par le fait que ladite pièce de matériau insérée (21) possède une configuration externe de forme cylindrique, son diamètre étant sensiblement égal au diamètre minimal du trou ménagé dans la pale (10) de turbine.

7. Méthode selon l'une quelconque des revendications précédentes, caractérisée par le fait que ledit moyen de positionnement consiste en une indentation (23, 24) pratiquée sur au moins l'une des extrémités de ladite pièce de matériau (21).

8. Méthode selon l'une quelconque des revendications 1 à 6, caractérisée par le fait que ledit moyen de positionnement consiste en un perçage traversant, possédant un diamètre faible comparé au diamètre dudit trou initial (13) de passage d'un câble d'attache.

9. Méthode selon l'une quelconque des revendications 1 à 6, caractérisée par le fait que ledit moyen de positionnement est constitué par ladite pièce de matériau (21), cette pièce de matériau (21) présentant une longueur telle que, en condition bloquée à demeure dans la pale (10) de turbine, au moins l'une des extrémités soit en saillie au-delà de la surface de cette pale (10) de turbine.

FIG 1

FIG 2

FIG 3

FIG 4

FIG 5

FIG 6

FIG 7

FIG 8